# EUROPEAN PATENT SPECIFICATION

(11) **EP 4 339 886 B1**
(45) Date of publication and mention of the grant of the patent: **17.12.2025**
(21) Application number: 22807391.2
(22) Date of filing: 02.05.2022
(51) Int. Cl.: G06T 7/00, G06T 7/50, G06V 10/56, G06V 10/82

(54) **TRAINING METHOD, TRAINING DEVICE, AND PROGRAM**
TRAININGSVERFAHREN, TRAININGSVORRICHTUNG UND PROGRAMM
PROCÉDÉ D'ENTRAÎNEMENT, DISPOSITIF D'ENTRAÎNEMENT ET PROGRAMME

(30) Priority: 13.05.2021 US 202163188013 P
(43) Date of publication of application: 20.03.2024
(73) Proprietor: Panasonic Intellectual Property Corporation of America, Torrance, CA 90504 (US)
(72) Inventor: ISHII, Yasunori, Kadoma-shi, Osaka 571-0057 (JP); TOMA, Tadamasa, Kadoma-shi, Osaka 571-0057 (JP); KOYAMA, Tatsuya, Kadoma-shi, Osaka 571-0057 (JP)
(74) Representative: Novagraaf International SA
(86) International application number: PCT/JP2022/019477
(87) International publication number: WO 2022/239689

(56) References cited:
- JP-A- 2019 125 116
- JP-A- 2020 154 605
- US-A1- 2021 090 277
- YASUNORI ISHII ET AL: "CutDepth:Edge-aware Data Augmentation in Depth Estimation", ARXIV.ORG, CORNELL UNIVERSITY LIBRARY, 201 OLIN LIBRARY CORNELL UNIVERSITY ITHACA, NY 14853, 16 July 2021 (2021-07-16), XP091012144
- YUN SANGDOO ET AL: "CutMix: Regularization Strategy to Train Strong Classifiers With Localizable Features", 2019 IEEE/CVF INTERNATIONAL CONFERENCE ON COMPUTER VISION (ICCV), IEEE, 27 October 2019 (2019-10-27), pages 6022 - 6031, XP033723124, DOI: 10.1109/ICCV.2019.00612
- TERRANCE DEVRIES ET AL: "Improved Regularization of Convolutional Neural Networks with Cutout", 29 November 2017 (2017-11-29), XP055535677, Retrieved from the Internet <URL:https://arxiv.org/pdf/1708.04552.pdf> [retrieved on 20181218]
- ZHUN ZHONG ET AL: "Random Erasing Data Augmentation", ARXIV.ORG, CORNELL UNIVERSITY LIBRARY, 201 OLIN LIBRARY CORNELL UNIVERSITY ITHACA, NY 14853, 16 August 2017 (2017-08-16), XP081282601

## Description

### [Technical Field]

The present disclosure relates to a computer-implemented method, a computer device, and a program.

### [Background Art]

Non-patent literature (NPL) 1 discloses a training method for training a machine learning model using training data including an RGB image as input data and a distance image as correct answer data. NPL 1 also discloses that by performing normal estimation when estimating a distance image from an RGB image using a trained machine learning model, plane estimation accuracy can be enhanced more than when the machine learning model is trained using a conventional training method. Patent Literature (PTL) 1 relates to systems and methods for conditioning training data to avoid learned aberrations.

### [Citation List]

### [Non-patent Literature]

[NPL 1] Jin Han Lee et al., "From Big to Small: Multi-Scale Local Planar Guidance for Monocular Depth Estimation", https://doi.org/10.48550/arXiv.1907.10326
[NPL 2] Yun Sangdoo et al: "CutMix:Regularization Strategy to Train Strong Classifiers With Localizable Features", 2019 IEEE/CVF INTERNATIONAL CONFERENCE ON COMPUTER VISION (ICCV), IEEE, 27 October 2019 (2019-10-27), pages 6022-6031, XP033723124, DOI: 10.1109/ICCv.2019.00612
[NPL 3] Terrance Devries et al.: "Improved Regularization of Convolutional Neural Networks with Cutout", 29 November 2017 (2017-11-29), XP0555356717, URL: https://arxiv.org/pdf/1708.04552.pdf
[NPL 4] ZHUN ZHONG ET AL: "Random Erasing Data Augmentation", ARXIV.ORG, CORNELL UNIVERSITY LIBRARY, 201 OLIN LIBRARY CORNELL UNIVERSITY ITHACA, NY 14853, 16 August 2017 (2017-08-16), XP081282601.

### [Patent Literature]

[PTL 1] US 2021/090277 A1

### [Summary of Invention]

### [Technical Problem]

However, there is a problem that even though data extension, which is used in the training method disclosed in NPL 1, is performed to increase the number of training data items, robustness for various scenes is hardly enhanced in monocular depth estimation.

The present disclosure is conceived in view of the above circumstances, and has an object to provide a training method and a program that can enhance robustness for various scenes in monocular depth estimation.

### [Solution to Problem]

The claimed invention is defined in the appended claims. In order to achieve the above object, a training method is disclosed in claim 1.

Note that general or specific aspects may be achieved by a device, a method, an integrated circuit, a computer program, a computer-readable recording medium such as a CD-ROM, or any combination thereof.

### [Advantageous Effects of Invention]

The present disclosure can provide training methods and programs that can enhance robustness for various scenes in monocular depth estimation.

### [Brief Description of Drawings]

[FIG. 1]

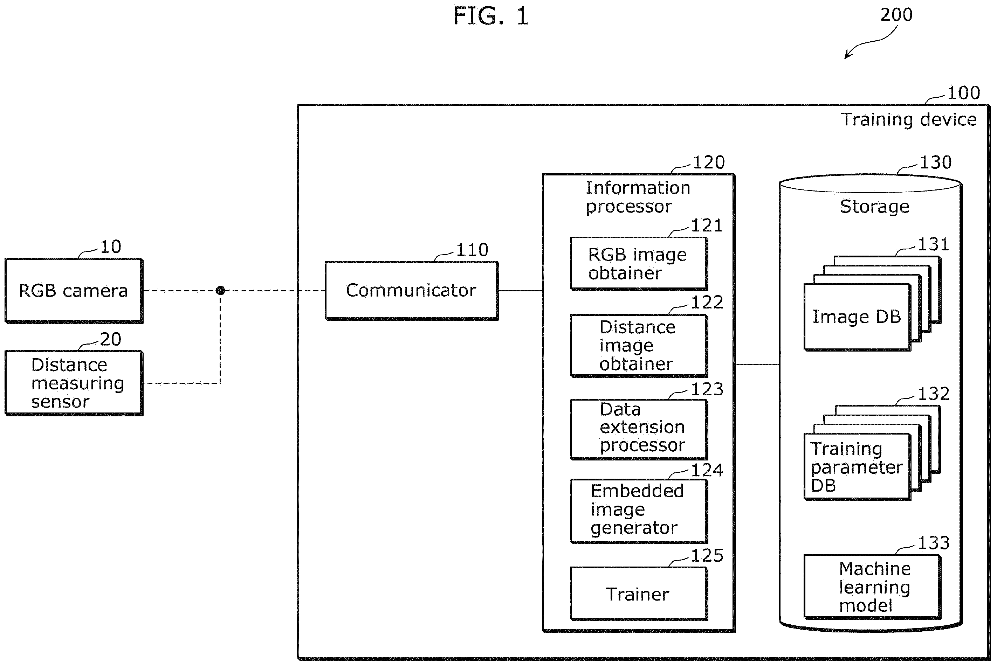

   FIG. 1 is a block diagram illustrating the functional configuration of a training system including a training device according to an embodiment.
[FIG. 2]

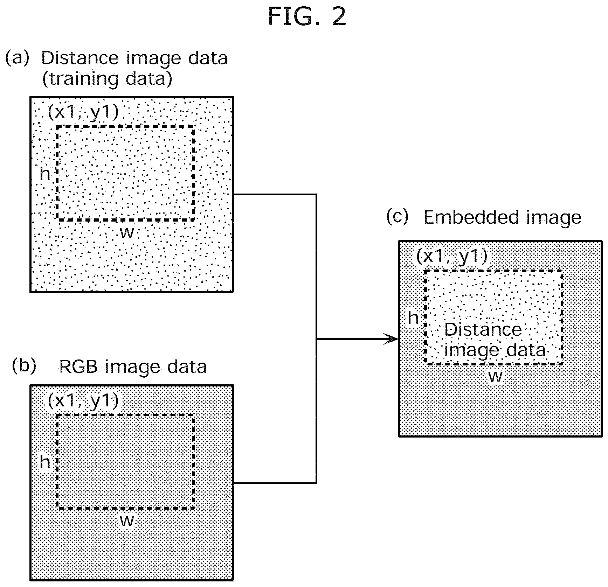

   FIG. 2 is a diagram for explaining a method of generating an embedded image.
[FIG. 3]

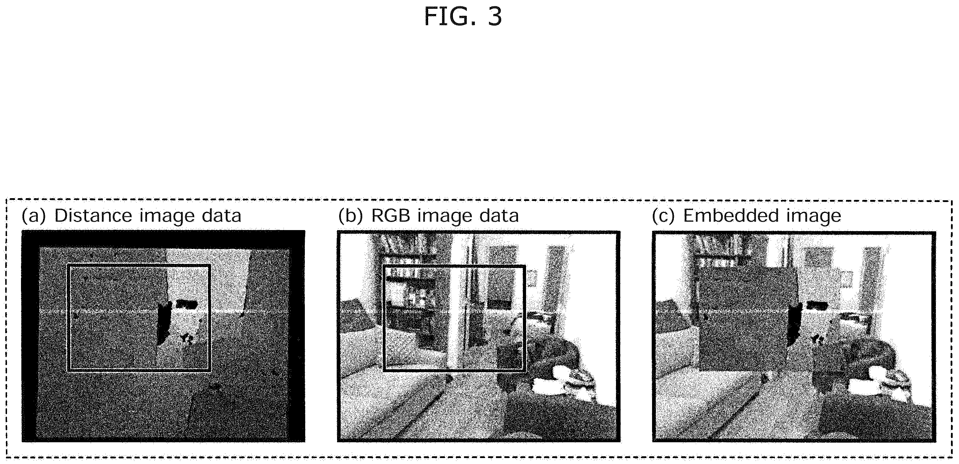

   FIG. 3 is a diagram illustrating one example of the embedded image.
[FIG. 4]

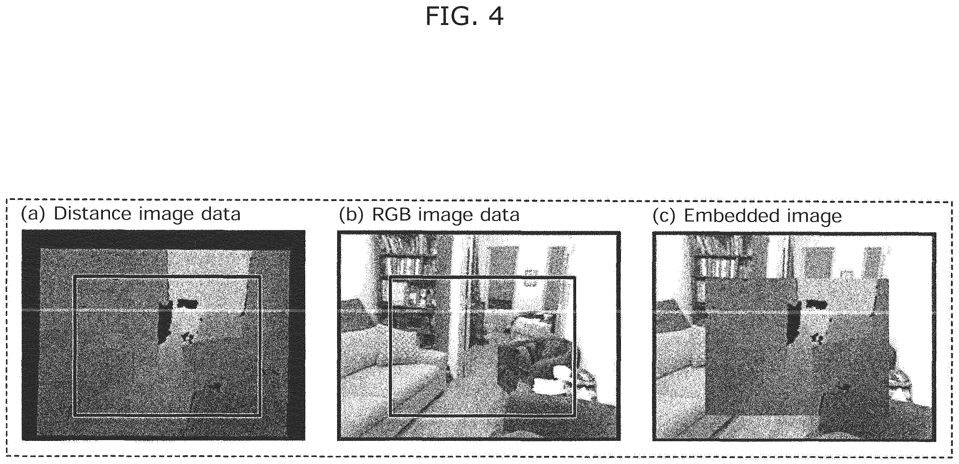

   FIG. 4 is a diagram illustrating another example of the embedded image.
[FIG. 5]

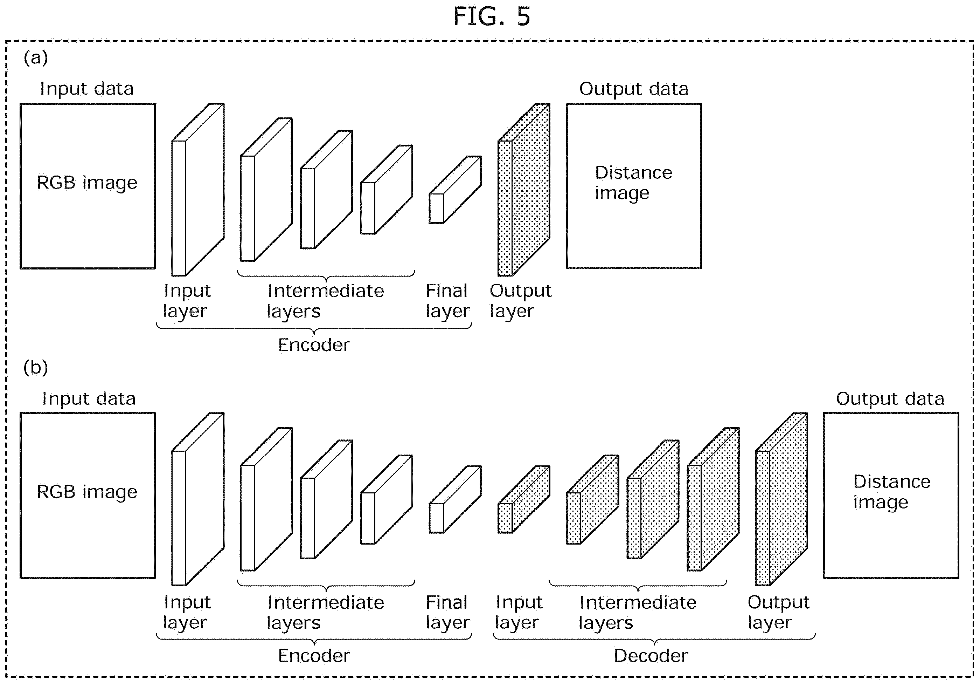

   FIG. 5 is a diagram schematically illustrating an example of a machine learning model.
[FIG. 6]

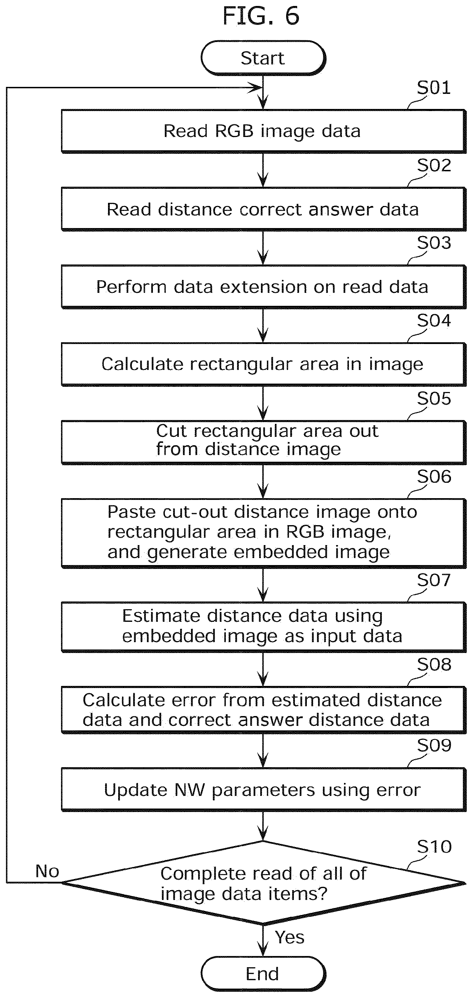

   FIG. 6 is a flowchart illustrating one example of an operation performed by the training device according to the embodiment.
[FIG. 7]

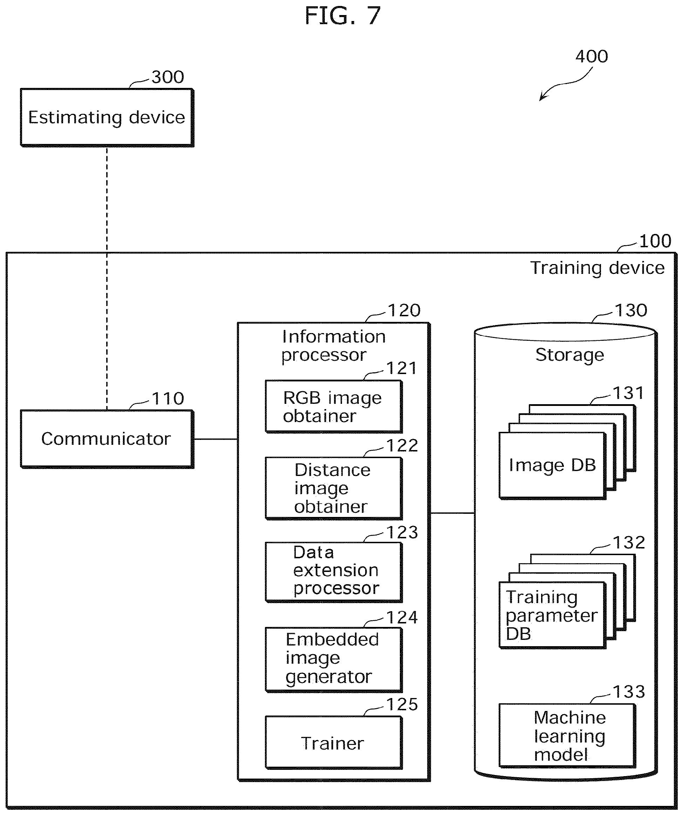

   FIG. 7 is a block diagram illustrating one example of the functional configuration of an estimation system including the training device according to the embodiment.
[FIG. 8]

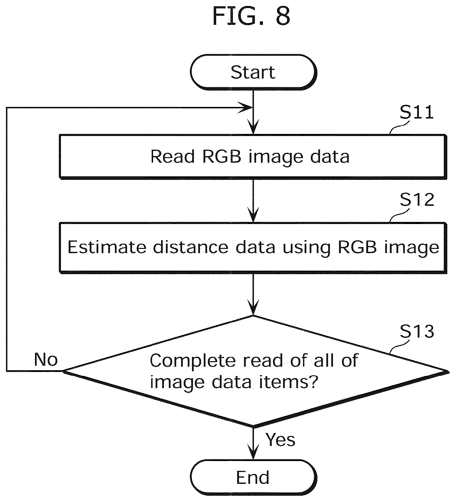

   FIG. 8 is a flowchart illustrating one example of an operation performed by an estimating device.
[FIG. 9]

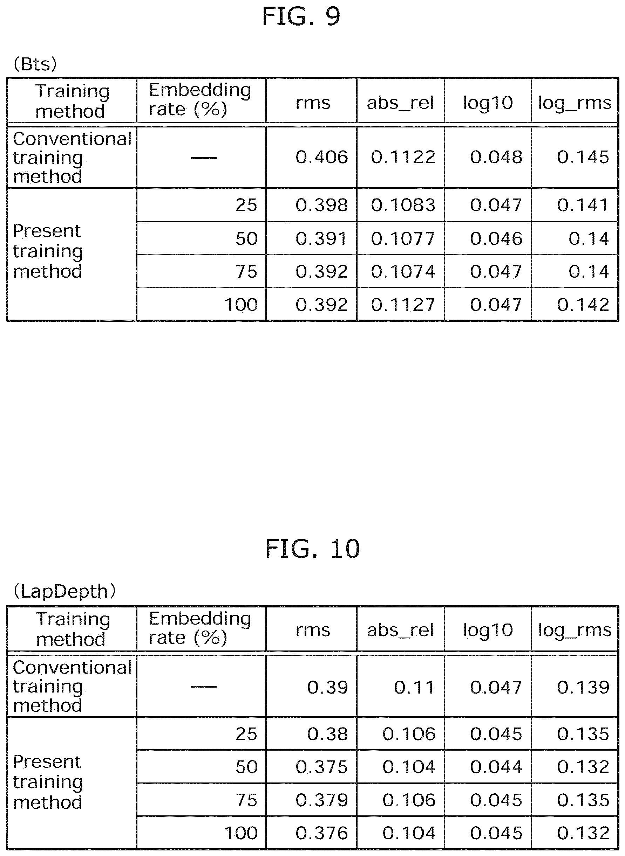

   FIG. 9 is a diagram illustrating results obtained in Experimental Example 1.
[FIG. 10]
   FIG. 10 is a diagram illustrating results obtained in Experimental Example 2.

### [Description of Embodiments]

Embodiments described below each present a general or specific example of the present disclosure. The numerical values, shapes, elements, steps, an order of the steps, etc. described in the following embodiments are mere examples, and therefore are not intended to limit the present disclosure. Among elements described in the embodiments, those not recited in any of the independent claims indicating the broadest concept are described as optional elements. The invention is defined by the appended claims.

### [Embodiment]

Hereinafter, a training device and a training method according to the present embodiment will be described.

### 1. Configuration

The training device according to the present embodiment includes, for example, a computer including memory and a processor (microprocessor), and achieves various functions and trains a machine learning model by the processor executing a control program stored in the memory.

FIG. 1 is a diagram illustrating one example of the functional configuration of a training system including the training device according to the embodiment. Training system 200 includes, for example, RGB camera 10, distance measuring sensor 20, and training device 100. The present embodiment illustrates an example in which an image is an RGB image composed by three channels of R, G, and B, but the image is not limited to this example. The image may be, for example, a monochrome image, an infrared image, or three-dimensional point cloud coordinates data.

### RGB camera 10 and distance measuring sensor 20

RGB camera 10 captures an RGB image and distance measuring sensor 20 captures a distance image corresponding to the RGB image captured by RGB camera 10. Each pixel of the distance image stores the distance to a target object shown in each pixel of the corresponding RGB image. If the positional relationship between the RGB camera and the sensor that obtains the distance is calibrated in advance, the same view point can be set for the distance image and the RGB image. This allows the distance image and the RGB image to have a mutually similar structural relationship of objects. For example, the distance image and the RGB image are approximately same in size, show the same objects, and have an approximately same structure. The expression "have an approximately same structure" means that when edges are calculated for each of the RGB image and the distance image, the location of an edge at which the distance changes is approximately same (i.e., not completely but approximately same). Even though an RGB image has only two-dimensional information, a location at which a three-dimensional change in a scene occurs can be recognized if the location of the edge at which the distance changes is given. When a distance image and an RGB image have an approximately same structure, the location of a three-dimensional change in a scene is indicated by approximately same pixels in each of the RGB image and the distance image. The distance image is used as correct answer data (hereinafter also referred to as correct answer distance image data) in training data for training machine learning model 133. RGB camera 10 and distance measuring sensor 20 may be included in, for example, a single sensor device and may be disposed aligned in the up-and-down direction or the left-and-right direction. RGB camera 10 is, for example, a monocular camera. Distance measuring sensor 20 is, for example, a stereo camera or a time-of-flight (ToF) camera. A distance image need not be an image. A distance image may be, for example, of a data type different from the data type of an RGB image, or may be a matrix replacing distance data obtained by a distance measuring sensor. For this reason, the distance measuring sensor is not specifically limited as long as the distance measuring sensor is a means that can obtain data including the matrix of distance data. Distance measuring sensor 20 may be, for example, a light detection and ranging (LiDAR) sensor. Distance data may be distance information from a distance measuring sensor or a value storing three-dimensional coordinates with any location in a three-dimensional space serving as the origin of coordinates. The distance information may be a value indicating an actual distance or may be a relative distance with a specific distance serving as a reference.

### Training device 100

As illustrated in FIG. 1, training device 100 includes, for example, communicator 110, information processor 120, and storage 130. Information processor 120 includes, for example, RGB image obtainer 121, distance image obtainer 122, data extension processor 123, embedded image generator 124, and trainer 125. It should be noted that it is not essential for training device 100 to include communicator 110 and data extension processor 123.

### Communicator 110

Communicator 110 is a communication circuit (communication module) for training device 100 to communicate with RGB camera 10 and distance measuring sensor 20. Communicator 110 includes a communication circuit (communication module) for communication via a local communication network, but may include a communication circuit (communication module) for communication via a wide-area communication network. Communicator 110 is, for example, a wireless communication circuit that performs wireless communication, but may be a wired communication circuit that performs wired communication. The communication standard of communication performed by communicator 110 is not specifically limited.

### Information processor 120

Information processor 120 performs various types of information processing related to training device 100. More specifically, information processor 120 stores RGB image data and distance image data received by communicator 110 into image database 131 in storage 130, for example. For example, information processor 120 reads RGB image data and distance image data corresponding to the RGB image data which are stored in image database 131, generates an input image that is training data for a machine learning model, and trains the machine learning model using a pair of the generated input image and a correct answer distance image.

Specifically, information processor 120 includes RGB image obtainer 121, distance image obtainer 122, data extension processor 123, embedded image generator 124, and trainer 125. The functions of RGB image obtainer 121, distance image obtainer 122, data extension processor 123, embedded image generator 124, and trainer 125 are achieved by a processor or a microcomputer, which configures information processor 120, executing a computer program stored in storage 130.

### RGB image obtainer 121

RGB image obtainer 121 reads RGB image data stored in image database 131 in storage 130, and outputs the RGB image data to data extension processor 123 and embedded image generator 124.

### Distance image obtainer 122

Distance image obtainer 122 reads distance image data stored in image database 131 in storage 130 and outputs the distance image data to data extension processor 123 and embedded image generator 124. More specifically, distance image obtainer 122 reads, from image database 131, distance image data corresponding to RGB image data read by RGB image obtainer 121 from image database 131. The distance image data has an approximately same size, includes the same objects, and has an approximately same structure as the RGB image data. The distance image data is used as correct answer data (correct answer distance image data) in training data.

### Data extension processor 123

Data extension processor 123 performs a data extension process on RGB image data and distance image data that are obtained, and obtains M (M is an integer of 2 or greater) RGB image data items and M distance image data items corresponding to the M RGB image data items. Data extension processor 123 outputs the M (M is an integer of 2 or greater) RGB image data items and the M distance image data items to embedded image generator 124.

The data extension process is a way to pad image data by performing a transformation process on the image data. For example, data extension processor 123 performs, for example, a data transformation process such as a rotation process, a zooming process, parallel processing, and a color transformation process on RGB image data and distance image data that are obtained. By performing such a transformation process, data extension processor 123 extends the dataset of the RGB image data and the distance image data to M datasets of RGB image data and distance image data (pads data if stated differently).

### Embedded image generator 124

Embedded image generator 124 cuts, for each of obtained M datasets each including RGB image data and distance image data, a partial area out from the distance image, and generates an embedded image by pasting the cut-out partial area onto a predetermined area, in the RGB image, which is located at a position corresponding to the position of the partial area and has a size corresponding to the size of the partial area. The partial area includes an edge portion indicating the contour of an object shown in the RGB image. The predetermined area has, for example, an area size that is 25% to 75%, inclusive, of the RGB image. The predetermined area may have an area size that is 30% to 70% or 40% to 60%, inclusive, of the RGB image. In particular, the predetermined area may have an area size that is 50% of the RGB image. Embedded image generator 124 generates training data including the generated embedded image as input data for training machine learning model 133 and distance image data as output data (correct answer data). A data pre-processor that performs pre-processing such as adjustment and standardization of an image size may be included in front of embedded image generator 124, or behind embedded image generator 124, i.e., between embedded image generator 124 and trainer 125.

FIG. 2 is a diagram for explaining a method of generating an embedded image. As illustrated in FIG. 2, embedded image generator 124 calculates the position (e.g., the coordinates (x1, y1) of the upper left corner) and size (e.g., height h × width w) of a rectangular area in the distance image, which replaces a predetermined area in the RGB image with distance image data, and the position (e.g., the coordinates (x1, y1) of the upper left corner) and size (e.g., height h × width w) of a predetermined rectangular area, in the RBG image, which corresponds to the rectangular area in the distance image. Embedded image generator 124 cuts the calculated rectangular area out from the distance image and pastes the cut-out rectangular area onto the predetermined rectangular area in the RGB image, to generate an embedded image.

The following describes examples of an embedded image generated using the above-described method. FIG. 3 is a diagram illustrating one example of the embedded image. FIG. 4 is a diagram illustrating another example of the embedded image.

In the embedded image in FIG. 3, 30% of the RGB image is replaced with a correct answer distance image. In the embedded image in FIG. 4, 70% of the RGB image is replaced with a correct answer distance image. As illustrated in FIG. 3 or FIG. 4, embedded image generator 124 calculates the position and size of a predetermined rectangular area in the RGB image and the position and size of a rectangular area, in the distance image, which corresponds to the predetermined rectangular area, cuts the calculated data of the rectangular area out from the correct answer distance image, and pastes the cut-out data onto the predetermined rectangular area in the RGB image, to generate an embedded image. More specifically, embedded image generator 124 randomly determines the coordinates of the upper left corner of the rectangular area, determines the maximum value indicating a maximum percentage for the width and height of the rectangular area from the upper left corner, relative to the area of the RGB image (the above-mentioned 25% to 75%, inclusive), and determines the size of the rectangular area within the range of the maximum value. In this case, the rectangular area is determined to include the edge portion of an object shown in the distance image. For example, in a distance image in which a plurality of objects are shown, a rectangular area may be determined to include edge portions indicating the contours of the plurality of objects. Since this leaves, as information, only edges of the plurality of objects, each of which is a part at which a distance varies in the distance image, it is possible to efficiently train machine learning model 133, using only distance-related information and without receiving any unnecessary information.

### Trainer 125

Trainer 125 trains machine learning model 133 using training data. The training data is a dataset including an embedded image generated by embedded image generator 124, as input data, and a distance image as output data (so-called correct answer data).

Trainer 125 calculates the error between (i) distance image data that is output after an embedded image is input to machine learning model 133 and (ii) correct answer data (correct answer distance image data), and using the error, updates network (NW) parameters such as weights for machine learning model 133. Trainer 125 stores the updated network parameters in training parameter database 132.

The method of updating parameters is not specifically limited, and a gradient descent method is one example among others. The error may be, for instance, L2 error, but is not specifically limited.

### Storage 130

Storage 130 is a storage device that stores, for instance, a dedicated application program for information processor 120 to execute various types of information processing. For example, image database 131, training parameter database 132, and machine learning model 133 are stored in storage 130. Storage 130 is implemented by, for example, a hard disk drive (HDD), but may be implemented by a semiconductor memory.

Image database 131 stores RGB image data and distance image data received from RGB camera 10 and distance measuring sensor 20. Training parameter database 132 stores network parameters updated by trainer 125.

Machine learning model 133 is a machine learning model to be trained by training device 100. FIG. 5 is a diagram schematically illustrating one example of a machine learning model structure.

Machine learning model 133 is a machine learning model to be trained by training device 100. Machine learning model 133 receives an RGB image as input and outputs a distance image. For example, machine learning model 133 is composed of an encoder network model and an output layer, as illustrated in (a) in FIG. 5.

The encoder network model extracts the feature representation of RGB image data that is input. The encoder network model is, for example, a convolution neural network (CNN) including a plurality of convolution layers, but is not limited to this. The encoder network model may be composed of a residual network (ResNet) or MobileNet or Transformer.

The output layer upsamples a low-dimensional feature representation that is output from the final layer in the encoder network model, to generate an output image having the same size as the input image. More specifically, the output layer upsamples the matrix (1 × width × height) of distance data outputted from the final layer in the encoder network model, and converts the matrix into a matrix having the same size as input data that is input to machine learning model 133 (the encoder network model) to output the matrix resulting from the conversion. The output layer may be a decoder network model, as illustrated in (b) in FIG. 5.

A skip connection or a spatial pyramid pooling (SPP) may be placed between the encoder network model and the final layer (e.g., the decoder network model).

### 2. Operation

Next, an operation performed by training device 100 according to the embodiment will be described. FIG. 6 is a flowchart illustrating one example of an operation performed by training device 100 according to the embodiment.

As illustrated in FIG. 6, first, training device 100 reads RGB image data stored in image database 131 in storage 130 (S01). Subsequently, training device 100 reads distance image (so-called correct answer distance image) data stored in image database 131 (S02). The distance image data read in step S02 is image data corresponding to the RGB image data read in step S01, and is correct answer distance data corresponding to when distance data is estimated using the RGB image.

Training device 100 then performs data extension on the data read in step S01 and the data read in step S02 (S03), and obtains M (M is an integer of 2 or greater) RGB image data items and M correct answer distance image data items corresponding to the M RGB image data items.

Subsequently, training device 100 calculates a rectangular area in the RGB image and a rectangular area in the correct answer distance image (S04). More specifically, training device 100 calculates (i) the position (e.g., the coordinates of the upper left corner) and size (height × width) of the rectangular area in the correct answer distance image which replaces a predetermined area in the RGB image, and (ii) the position of the rectangular area in the RGB image which corresponds to the rectangular area in the correct answer distance image.

Training device 100 then cuts a distance image in the rectangular area out from the correct answer distance image (S05), pastes the cut-out distance image onto the rectangular area in the RGB image, and generates an embedded image (S06).

Subsequently, training device 100 uses the embedded image generated in step S06, as the input data in the training data, to estimate distance data (S07). More specifically, training device 100 inputs the embedded image to machine learning model 133 and causes machine learning model 133 to infer distance data.

Subsequently, training device 100 calculates an error from the distance data estimated in step S07 and the correct answer distance data (S08), and updates network (NW) parameters using the error (S09).

Subsequently, training device 100 determines whether read of all of image data items is completed (S10). When determining that the read is not completed (No in S10), training device 100 returns to step S01. When determining that the read is completed (Yes in S10), training device 100 ends the operation.

### 3. Advantageous effects, etc.

As described above, the training method according to the invention is disclosed in claim 1.

With the training method according to the present embodiment, since a distance image to be pasted onto an image has neither object color information nor object texture information, it is possible, with the use of an embedded image, to conduct training that enhances robustness against color and texture fluctuations. It is therefore possible, with the training method according to the present embodiment, to enhance robustness for various scenes in monocular depth estimation.

For example, in the training method according to the present embodiment, the predetermined area has an area size that is 25% to 75%, inclusive, of the image.

With the training method according to the present embodiment, by adjusting the size of a predetermined area in accordance with the percentage described above to paste a distance image onto an image, robustness for various scenes can be more enhanced in monocular depth estimation.

According to the invention, in the training method the partial area includes an edge portion indicating the contour of an object shown in the image.

With the training method according to the present embodiment, by pasting, onto an image, a partial area including an edge portion indicating the contour of an object in a distance image, machine learning model 133 can be trained to learn distance-related information from an edge at which a distance varies in the distance image. It is therefore possible, with the training method according to the present embodiment, to efficiently train machine learning model 133 to learn only distance-related information without receiving any unnecessary information.

For example, in the training method according to the present embodiment, the machine learning model is trained to learn the relationship between the image and the distance image.

With the training method according to the present embodiment, machine learning model 133 can be trained to be capable of estimating a distance image based on feature values extracted from an image.

For example, in the training method according to the present embodiment, machine learning model 133 is composed of an encoder network model and an output layer that upsamples, to an output image, a low-dimensional feature representation outputted from the encoder network model, where the output image has the same size as the image.

With the training method according to the present embodiment, it is possible to convert a low-dimensional feature representation extracted and output using an encoder network model into output data having the same size as input data, to output the output data.

For example, in the training method according to the present embodiment, the machine learning model is composed of an encoder network model and a decoder network model.

With the training method according to the present embodiment, by stepwisely upsampling a low-dimensional feature representation extracted and output using an encoder network model, it is possible to convert the feature representation into output data having the same size as input data to output the output data.

A training device according to the invention is disclosed in claim 5.

Since a distance image to be pasted onto an image has neither object color information nor object texture information, the training device according to the embodiment can conduct, with the use of an embedded image, training that enhances robustness against color and texture fluctuations. It is therefore possible, with the training device according to the present embodiment, to enhance robustness for various scenes in monocular depth estimation.

A program according to the present embodiment is a program for causing a computer to execute the above-described training method.

The program according to the present embodiment can produce the same advantageous effects as those produced by the above-described training method.

### 4. Application examples

Next, application examples of training device 100 according to the embodiment will be described. FIG. 7 is a block diagram illustrating one example of the functional configuration of an estimation system including the training device according to the embodiment.

As illustrated in FIG. 7, estimation system 400 includes, for example, training device 100 and estimating device 300. In the example in FIG. 7, estimating device 300 is provided separately from training device 100, but estimating device 300 may include training device 100, for example.

Estimating device 300 estimates distance data using an RGB image. Estimating device 300 may be applied to a mobile body such as a vehicle or a mobile robot, or a monitoring system in a building.

In the example in FIG. 7, estimating device 300 includes a training parameter database and a machine learning model that is same as machine learning model 133 in training device 100, although not shown in the figure. When network parameters are updated by training device 100, estimating device 300 receives and stores the updated network parameters in the training parameter database.

FIG. 8 is a flowchart illustrating one example of an operation performed by estimating device 300. As illustrated in FIG. 8, estimating device 300 reads an RGB image stored in a storage (not shown in FIG. 7) (S11).

Subsequently, estimating device 300 estimates distance data using the RGB image (S12). More specifically, estimating device 300 inputs the RGB image to a machine learning model (not shown) and causes the machine learning model to infer distance data.

Estimating device 300 then determines whether read of all of image data items is completed (S13). When determining that the read is not completed (No in S13), estimating device 300 returns to step S11. When determining that the read is completed (Yes in S13), estimating device 300 ends the operation.

### 5. Experimental examples

Next, the training method according to the present disclosure will be described in detail using experimental examples. In the following experimental examples, the estimation accuracy of a machine learning model trained using the training method according to the present disclosure and the estimation accuracy of a machine learning model trained using a conventional training method were evaluated. RGB images were input to these trained machine learning models.

The conventional training method is a method for conducting training using training data including an RGB image as input data and a distance image as output data that is a correct answer.

### Experimental Example 1

In Experimental Example 1, a big-to-small (Bts) algorithm described in NPL 1 was used as a monocular depth estimation algorithm. In Experimental Example 1, the conventional training method (hereinafter also referred to as "the conventional method") and the training method according to the present disclosure (hereinafter also referred to as "the present method") were applied to the Bts algorithm. In the training method according to the present disclosure, embedded images with different embedding rates (%) were used as input data in training data. An embedding rate indicates the percentage of a correct answer distance image pasted onto an RGB image.

An RGB image used for the generation of an embedded image is input to the Bts algorithm, and the error between a distance image to be output and a correct answer distance image is calculated. In the calculation of the error, root mean square (rms), absolute relative error (Abs_rel), log10, and log_rms were used. The results of the calculation are shown in FIG. 9. FIG. 9 is a diagram showing the results obtained in Experimental Example 1.

As illustrated in FIG. 9, in the application of the present method to the training of the Bts algorithm, it is verified that the present method improved its estimation accuracy more than the conventional method whichever embedding rate was used. At the embedding rate of 50%, in particular, the smallest values were obtained for rms, log10, and log_rms. This verified that using an embedded image with an embedding rate of 50%, as input data in training data, achieves the highest estimation accuracy in monocular depth estimation.

It is therefore verified, from the results obtained in Experimental Example 1, that the present method can enhance robustness for various scenes in monocular depth estimation.

### Experimental Example 2

In Experimental Example 2, an experiment is conducted in the same manner as in Experimental Example 1, except for using a Laplacian depth (LapDepth) algorithm as a monocular depth estimation algorithm. The results of the experiment are shown in FIG. 10. FIG. 10 is a diagram showing the results obtained in Experimental Example 2.

As illustrated in FIG. 10, in the application of the present method to the LapDepth algorithm, it is verified that the present method improved its estimation accuracy more than the conventional method whichever embedding rate was used. At the embedding rate of 50%, in particular, the smallest values were obtained for rms, abs_rel, log10, and log_rms. This verified that using an embedded image with an embedding rate of 50%, as input data in training data, achieves the highest estimation accuracy in monocular depth estimation.

It is therefore verified, from the results obtained in Experimental Example 2, that the present method can enhance robustness for various scenes in monocular depth estimation.

### Other Embodiments

The invention is defined by the appended claims.

The following forms may be also included in the range of one or more aspects of the present disclosure.
(1) Some of the elements included in the training device implements the above-described training method may be a computer system including, for instance, a microprocessor, read-only memory (ROM), random access memory (RAM), a hard disk unit, a display unit, a keyboard, and a mouse. A computer program is stored in the RAM or hard disk unit. The functions of the training device are achieved by the microprocessor operating in accordance with the computer program. In order to achieve a predetermined function, the computer program is configured by combining a plurality of instruction codes indicating commands directed to the computer.
(2) Some of the elements included in the training device that implements the above-described training method may be configured by a single integrated circuit through system LSI (Large-Scale Integration). "System LSI" refers to very large-scale integration in which a plurality of constituent elements are integrated on a single chip, and specifically, refers to a computer system including, for instance, a microprocessor, ROM, and RAM. A computer program is stored in the RAM. The system LSI circuit realizes the functions of the training device by the microprocessor operating in accordance with the computer program.
(3) Some of the elements included in the training device that implements the above-described training method may be configured by an IC card or a single module that is attachable to and detachable from the training device. The IC card or module is a computer system including, for instance, a microprocessor, ROM, and RAM. The IC card or module may include the aforementioned very large-scale integration. The IC card or module realizes the functions of the training device by the microprocessor operating in accordance with a computer program. The IC card or module may have tamper resistance.
(4) Some of the elements included in the training device that implements the above-described training method may be the computer program or a digital signal that is recorded on a computer-readable recording medium, e.g., a flexible disk, a hard disk, a compact disc (CD)-ROM, MO, DVD, DVD-ROM, DVD-RAM, Blu-ray (registered trademark) Disc (BD), a semiconductor memory, etc. Moreover, the present disclosure may be the digital signal recorded on any one of these recording media.

For example, a computer program that implements the above-described training method causes a computer to execute: obtaining an image and a distance image corresponding to the image; cutting a partial area out from the distance image obtained; generating an embedded image by pasting the partial area cut out from the distance image onto a predetermined area in the image, where the predetermined area is located at a position corresponding to the position of the partial area and has a size corresponding to the size of the partial area; and training a machine learning model, using training data including the embedded image as input data and the distance image as correct answer data.

Some of the elements included in the training device that implements the above-described training method may be the computer program or the digital signal transmitted via, for instance, a telecommunication line, a wireless or wired communication line, a network as represented by the Internet, or data broadcasting.

(5) The present disclosure may be the methods described above. Moreover, the present disclosure may be a computer program that implements these methods using a computer, or may be a digital signal including the computer program.

(6) The present disclosure may be a computer system including a microprocessor and memory. The memory may store the computer program and the microprocessor may operate in accordance with the computer program.

(7) The computer program or digital signal may be recorded on the recording medium and transferred, or may be transferred via the network or the like, so that the present disclosure is implemented by a separate and different computer system.

(8) Some of the elements included in the training device that implements the above-described training method may be implemented by a cloud device or a server device.

(9) The embodiments and variations described above may be combined.

### [Industrial Applicability]

The present disclosure can be used for, for instance, training methods and programs for supervised contrastive learning which are applicable to training of various kinds of monocular depth estimation algorithm.

### [Reference Signs List]

- 10: RGB camera
- 20: distance measuring sensor
- 100: training device
- 110: communicator
- 120: information processor
- 121: RGB image obtainer
- 122: distance image obtainer
- 123: data extension processor
- 124: embedded image generator
- 125: trainer
- 130: storage
- 131: image database
- 132: training parameter database
- 133: machine learning model
- 200: training system
- 300: estimating device
- 400: estimation system

## Claims

1. A computer-implemented method comprising:
obtaining (S01, S02) an image and a distance image corresponding to the image, wherein the image is an RGB image and each pixel of the distance image stores a distance to a target object shown in each pixel of the RGB image,
wherein the method further comprises:
cutting (S05) a partial area out from the distance image obtained;
generating an embedded image by pasting the partial area cut out from the distance image onto a predetermined area in the image, the predetermined area being located at a position corresponding to a position of the partial area and having a size corresponding to a size of the partial area (S06); and
training (S07-S09) a machine learning model (133), using training data including the embedded image as input data and the distance image as correct answer data, wherein
the machine learning model (133) receives an RGB image as input and outputs a distance image, and
the partial area includes an edge portion indicating a contour of an object shown in the image.

2. The computer-implemented method according to claim 1, wherein
the predetermined area has an area size that is 30% to 70%, inclusive, of the image.

3. The computer-implemented method according to claim 1 or 2, wherein
the machine learning model (133) is trained to learn a relationship between the image and the distance image.

4. The computer-implemented method according to any one of claims 1 to 3, wherein
the machine learning model (133) is composed of an encoder network model and a decoder network model.

5. A computer device comprising:
an embedded image generator (124) that obtains an image and a distance image corresponding to the image, wherein the image is an RGB image and each pixel of the distance image stores a distance to a target object shown in each pixel of the RGB image, wherein:
the embedded image generator (124) cuts a partial area out from the distance image obtained, and generates an embedded image by pasting the partial area cut out from the distance image onto a predetermined area in the image, the predetermined area being located at a position corresponding to a position of the partial area and having a size corresponding to a size of the partial area; and
the computer device further comprises a trainer (125) that trains a machine learning model (133), using training data including the embedded image as input data and the distance image as correct answer data, wherein
the machine learning model (133) receives an RGB image as input and outputs a distance image, and
the partial area includes an edge portion indicating a contour of an object shown in the image.

6. A program for causing a computer to execute the computer-implemented method according to any of claims 1 to 4.

## Patentansprüche

1. Computerimplementiertes Verfahren, umfassend:
Erhalten (S01, S02) eines Bildes und eines Entfernungsbildes, das dem Bild entspricht, wobei das Bild ein RGB-Bild ist und jedes Pixel des Entfernungsbildes eine Entfernung zu einem Zielobjekt speichert, das in jedem Pixel des RGB-Bildes gezeigt wird,
wobei das Verfahren ferner umfasst:
Schneiden (S05) eines Teilbereichs aus dem erhaltenen Entfernungsbild;
Erzeugen eines eingebetteten Bildes mittels Einfügens des aus dem Entfernungsbild ausgeschnittenen Teilbereichs auf einem vorbestimmten Bereich in dem Bild, wobei der vorbestimmte Bereich sich an einer Position befindet, die einer Position des Teilbereichs entspricht und eine Größe aufweist, die einer Größe des Teilbereichs entspricht (S06); und
Trainieren (S07 bis S09) eines Maschinenlernmodells (133) unter Verwendung von Trainingsdaten, die das eingebettete Bild als Eingabedaten und das Entfernungsbild als korrekte Antwortdaten umfassen, wobei
das Maschinenlernmodell (133) ein RGB-Bild als Eingabe empfängt und ein Entfernungsbild ausgibt, und
der Teilbereich einen Randabschnitt umfasst, der eine Kontur eines in dem Bild gezeigten Objekts angibt.

2. Computerimplementiertes Verfahren nach Anspruch 1, wobei
der vorbestimmte Bereich eine Bereichsgröße aufweist, die zwischen einschließlich 30 % und 70 % des Bildes ausmacht.

3. Computerimplementiertes Verfahren nach Anspruch 1 oder 2, wobei
das Maschinenlernmodell (133) trainiert wird, um eine Beziehung zwischen dem Bild und dem Entfernungsbild zu lernen.

4. Computerimplementiertes Verfahren nach einem der Ansprüche 1 bis 3, wobei
das Maschinenlernmodell (133) aus einem Codierer-Netzwerkmodell und einem Decodierer-Netzwerkmodell besteht.

5. Computervorrichtung, umfassend:
einen eingebetteten Bildgenerator (124), der ein Bild und ein Entfernungsbild erhält, das dem Bild entspricht, wobei das Bild ein RGB-Bild ist und jedes Pixel des Entfernungsbildes eine Entfernung zu einem Zielobjekt speichert, das in jedem Pixel des RGB-Bildes gezeigt ist,
wobei:
der eingebettete Bildgenerator (124) einen Teilbereich aus dem erhaltenen Entfernungsbild ausschneidet und ein eingebettetes Bild mittels Einfügens des aus dem Entfernungsbild ausgeschnittenen Teilbereichs auf einem vorbestimmten Bereich in dem Bild erzeugt, wobei der vorbestimmte Bereich sich an einer Position befindet, die einer Position des Teilbereichs entspricht und eine Größe aufweist, die einer Größe des Teilbereichs entspricht; und
die Computervorrichtung ferner einen Trainer (125) umfasst, der ein Maschinenlernmodell (133) unter Verwendung von Trainingsdaten trainiert, die das eingebettete Bild als Eingabedaten und das Entfernungsbild als korrekte Antwortdaten umfassen, wobei
das Maschinenlernmodell (133) ein RGB-Bild als Eingabe empfängt und ein Entfernungsbild ausgibt, und
der Teilbereich einen Randabschnitt umfasst, der eine Kontur eines in dem Bild gezeigten Objekts angibt.

6. Programm zum Veranlassen eines Computers, das computerimplementierte Verfahren nach einem der Ansprüche 1 bis 4 auszuführen.

## Revendications

1. Procédé mis en œuvre par ordinateur comprenant :
l'obtention (S01, S02) d'une image et d'une image de distance correspondant à l'image, dans lequel l'image est une image RVB et chaque pixel de l'image de distance stocke une distance à un objet cible représenté dans chaque pixel de l'image RVB,
dans lequel le procédé comprend en outre :
le retrait par découpe (S05) d'une zone partielle à partir de l'image de distance obtenue ;
la génération d'une image intégrée par le collage la zone partielle retirée par découpe à partir de l'image de distance sur une zone prédéterminée dans l'image, la zone prédéterminée étant située à une position correspondant à une position de la zone partielle et ayant une taille correspondant à une taille de la zone partielle (S06) ; et
l'entraînement (S07-S09) d'un modèle d'apprentissage automatique (133), à l'aide de données d'entraînement incluant l'image intégrée en tant que données d'entrée et l'image de distance en tant que données de réponse correcte, dans lequel
le modèle d'apprentissage automatique (133) reçoit une image RVB en entrée et délivre en sortie une image de distance, et
la zone partielle inclut une partie de bord indiquant un contour d'un objet représenté dans l'image.

2. Procédé mis en œuvre par ordinateur selon la revendication 1, dans lequel
la zone prédéterminée possède une taille de zone qui constitue 30 % à 70 % inclus de l'image.

3. Procédé mis en œuvre par ordinateur selon la revendication 1 ou 2, dans lequel
le modèle d'apprentissage automatique (133) est entraîné pour apprendre une relation entre l'image et l'image de distance.

4. Procédé mis en œuvre par ordinateur selon l'une quelconque des revendications 1 à 3, dans lequel
le modèle d'apprentissage automatique (133) est composé d'un modèle de réseau d'encodage et d'un modèle de réseau de décodage.

5. Dispositif informatique comprenant :
un générateur d'image intégrée (124) qui obtient une image et une image de distance correspondant à l'image, dans lequel l'image est une image RVB et chaque pixel de l'image de distance stocke une distance à un objet cible représenté dans chaque pixel de l'image RVB,
dans lequel :
le générateur d'image intégrée (124) retire par découpe une zone partielle à partir de l'image de distance obtenue, et génère une image intégrée par le collage la zone partielle retirée par découpe à partir de l'image de distance sur une zone prédéterminée dans l'image, la zone prédéterminée étant située à une position correspondant à une position de la zone partielle et ayant une taille correspondant à une taille de la zone partielle ; et
le dispositif informatique comprend en outre un dispositif d'entraînement (125) qui entraîne un modèle d'apprentissage automatique (133), à l'aide de données d'entraînement incluant l'image intégrée en tant que données d'entrée et l'image de distance en tant que données de réponse correcte, dans lequel
le modèle d'apprentissage automatique (133) reçoit une image RVB en entrée et délivre en sortie une image de distance, et
la zone partielle inclut une partie de bord indiquant un contour d'un objet représenté dans l'image.

6. Programme pour amener un ordinateur à exécuter le procédé mis en œuvre par ordinateur selon l'une quelconque des revendications 1 à 4.
